# EUROPÄISCHE PATENTSCHRIFT

(11) **EP 3 837 154 B1**
(45) Veröffentlichungstag und Bekanntmachung des Hinweises auf die Patenterteilung: **09.11.2022**
(21) Anmeldenummer: 19753346.6
(22) Anmeldetag: 13.08.2019
(51) Int. Cl.: B62D 33/06

(54) **FAHRERHAUSLAGERUNG FÜR EIN NUTZFAHRZEUG, NUTZFAHRZEUG UND VERFAHREN ZUR EINSTELLUNG EINER DÄMPFUNG EINER FAHRERHAUSLAGERUNG**
DRIVER'S CAB MOUNTING FOR A COMMERCIAL VEHICLE, COMMERCIAL VEHICLE AND METHOD FOR ADJUSTING THE DAMPING OF A DRIVER'S CAB MOUNTING
SUSPENSION DE CABINE DE CONDUCTEUR POUR VÉHICULE UTILITAIRE, VÉHICULE UTILITAIRE ET PROCÉDÉ DE RÉGLAGE D'UN AMORTISSEMENT D'UNE SUSPENSION DE CABINE DE CONDUCTEUR

(30) Priorität: 16.08.2018 DE 102018119913
(43) Veröffentlichungstag der Anmeldung: 23.06.2021
(73) Patentinhaber: MAN Truck & Bus SE, 80995 München (DE)
(72) Erfinder: GERRITZEN, Ralph, 82110 Germering (DE); MENDLER, Hardy, 85221 Dachau (DE)
(74) Vertreter: v. Bezold & Partner Patentanwälte - PartG mbB
(86) Internationale Anmeldenummer: PCT/EP2019/071642
(87) Internationale Veröffentlichungsnummer: WO 2020/035469

(56) Entgegenhaltungen:
- EP-A1- 1 702 772
- EP-A1- 2 048 008
- EP-A1- 3 323 699
- EP-A2- 1 661 796
- DE-A1- 2 445 941
- GB-A- 2 014 522
- US-A- 5 641 153
- US-A- 6 073 066
- US-A1- 2013 264 455
- US-A1- 2018 029 651
- US-A1- 2018 178 856
- US-B2- 7 240 754

## Beschreibung

Die Erfindung betrifft eine Fahrerhauslagerung für ein Nutzfahrzeug, ein Nutzfahrzeug mit einer entsprechenden Fahrerhauslagerung sowie ein Verfahren zur Einstellung einer Dämpfung einer Fahrerhauslagerung.

Aus dem Stand der Technik sind Nutzfahrzeuge mit Fahrerhaus bekannt, wobei das Fahrerhaus über eine entsprechende Fahrerhauslagerung, wie beispielsweise aus der EP 1 584 545 A2 oder EP 1 702 772 B1 bekannt, mit dem Fahrzeugrahmen in Verbindung steht. US 5 641 153 offenbart den Oberbegriff des Anspruchs 1. Als Bindeglied zwischen Fahrerhaus und Fahrzeugrahmen übernimmt die Fahrerhauslagerung dabei eine Reihe unterschiedlicher Funktionen, unter anderem auch die Schwingungsentkopplung des Fahrerhauses vom Fahrbahnuntergrund und/oder dem Motor. Neben der daraus resultierenden Verbesserung der Fahrsicherheit steht hierbei vor allem auch eine Verbesserung des Fahrkomforts im Vordergrund, da der Fahrer - gerade im Fernverkehr - fast seine komplette Arbeitszeit im Fahrerhaus verbringt.

Der Grad des Komforts für den Fahrer hängt letztlich vom konstruktiven Aufwand ab, der für die Fahrerhauslagerung betrieben wird. Einfachere Lösungen bestehen in der Regel aus zwei Gummidrehlagern vorne mit einer Dämpfung, die Wank- und Nickbewegungen unterbinden soll, sowie zwei Federbeinen hinten. Für die Seitenführung des Fahrerhauses sind dabei zwei Rollen an der Rückseite verantwortlich. Ferner ist bekannt zur Fahrerhauslagerung sowohl vorne als auch hinten Federbeine einzubauen, wobei sie vorne ein Stabilisator unterstützt. Die Seitenführung des Fahrerhauses hinten übernimmt dann meist ein Querlenker. Nachteilig an den bisherigen Lösungen sind allerdings der hohe Bauteil- und Bauraumbedarf und das entsprechende Gewicht der verschiedenen Komponenten.

Entsprechend ist es Aufgabe der Erfindung eine Fahrerhauslagerung für ein Nutzfahrzeug bereitzustellen, mit der die Nachteile der bisherigen Lösungen vermieden werden können. Insbesondere ist es Aufgabe der Erfindung eine Fahrerhauslagerung bereitzustellen, die weniger Bauraum und weniger Gewicht als die bisherigen Lösungen beansprucht.

Diese Aufgaben werden erfindungsgemäß durch eine Vorrichtung sowie ein Kraftfahrzeug mit den Merkmalen der unabhängigen Ansprüche gelöst. Vorteilhafte Ausführungsformen und Anwendungen der Erfindung sind Gegenstand der unabhängigen Ansprüche und werden in der folgenden Beschreibung unter teilweiser Bezugnahme auf die Figuren näher erläutert.

Ein Grundgedanke der Erfindung ist dabei, Funktionen und Aufgaben, für die in bisherigen Systemen eigenständige meist passive Komponenten, beispielsweise der Stabilisator zur Wankstabilisierung, vorgesehen sind, durch ein gezieltes aktives Ansteuern der Fahrerhauslagerung, insbesondere durch ein Variieren der Dämpfungskraft der Fahrerhauslagerung, zu übernehmen, wodurch raumeinnehmende Bauteile der bisherigen Lösungen eingespart werden können.

Die erfindungsgemäße Fahrerhauslagerung für ein Nutzfahrzeug umfasst hierzu - in an sich bekannter Weise - mindestens vier zwischen dem Fahrerhaus und einem Rahmen des Nutzfahrzeugs, bevorzugt in Form einer Vier-Punkt-Lagerung, angeordnete Dämpfereinrichtungen, die jeweils separat in ihrer Dämpfungskraft einstellbar sind. Vorzugsweise handelt es sich bei den Dämpfereinrichtungen um semi-aktive und/oder aktive Dämpfer, die in ihrer Dämpfercharakteristik (Kraft-Geschwindigkeits-Charakteristik) diskret oder stufenlos (z. B. CDC-Dämpfer, elektro- und magnetorheologische Dämpfer) verstellt werden können. Die Dämpfereinrichtungen können dabei ein oder mehrere hydraulische, hydro-pneumatische und/oder pneumatische Stoß- und/oder Schwingungsdämpfer umfassen und/oder als Teil eines Feder-Dämpfer-Systems, beispielsweise als Teil eines Luftfederdämpfermoduls, ausgebildet sein.

Erfindungsgemäß ist vorgesehen, dass jede der Dämpfereinrichtungen ausgebildet ist, sowohl Zug- als auch Druckbelastung vom Fahrerhaus auf den Rahmen zu dämpfen. Als Zugbelastung kann dabei eine im Wesentlichen entgegen der Schwerkraftrichtung gerichtete Kraft des Fahrerhauses auf den Rahmen und als Druckbelastung eine im Wesentlichen in Schwerkraftrichtung gerichtete Kraft des Fahrerhauses auf den Rahmen bezeichnet werden. Mit anderen Worten können die Dämpfereinrichtungen somit ausgebildet sein, Belastungen, die aus bzw. in zueinander entgegengesetzte Richtungen, auf die jeweilige Dämpfereinrichtung wirken, zu dämpfen. Auf vorteilhafte Weise wird so eine möglichst schnelle Dämpfung von Bewegungen Fahrerhauses erreicht, da die jeweiligen Dämpfereinrichtungen in allen Belastungszuständen eine ausreichende Dämpfung aufbringen können. Beispielsweise können hierzu bei einer Nickbewegung des Fahrerhauses im Zuge eines Abbremsvorgangs, die vorderen "*auf Druck*" belasteten Dämpfereinrichtungen die Druckbelastung dämpfen, während gleichzeitig die hinteren "*auf Zug*" belasteten Dämpfereinrichtungen die Zugbelastung dämpfen.

Da mit vielen der heute verfügbaren Dämpfern oftmals nur eine einseitige bzw. stark asymmetrische Dämpfungen in Druck- und Zugrichtung realisiert werden kann, kann nach einem ersten Aspekt der Erfindung jede Dämpfereinrichtung je zwei Dämpfer umfassen, die im Folgenden zur besseren Unterscheidbarkeit als erster und zweiter Dämpfer bezeichnet werden. Die beiden Dämpfer pro Dämpfereinrichtung können dabei in ihrer Funktion invertiert zueinander wirken. D. h., der zweite Dämpfer kann sich in seiner Wirkung zum ersten Dämpfer so verhalten, als ob auf ihn gerade die umgekehrte Belastung wie auf den ersten Dämpfer wirkt. Dies kann beispielsweise mit zwei baugleichen Dämpfern realisiert werden, die entgegengesetzt, d. h. um 180° gedreht zueinander, zwischen Fahrerhaus und Rahmen montiert werden.

Zudem sind die beiden Dämpfer je Dämpfereinrichtung auch derart angeordnet, dass bei einer Zugbelastung vom Fahrerhaus auf den Rahmen im Wesentlichen der erste Dämpfer und bei einer Druckbelastung vom Fahrerhaus auf den Rahmen im Wesentlichen der zweite Dämpfer dämpfend wirkt. Auch dieses Merkmal lässt sich beispielsweise mit zwei im Wesentlichen baugleichen Dämpfern, z. B. mit einer hohen Dämpfungskraft für Zugbelastungen, realisieren, die entgegengesetzt zwischen Fahrerhaus und Rahmen montiert werden. Im Falle einer Zugbelastung vom Fahrerhaus auf den Rahmen kann somit der erste - vorliegend auf Zug belastete - Dämpfer aufgrund seiner Dämpfercharakteristik dämpfend wirken, während der zweite Dämpfer im Wesentlichen unwirksam sein kann. Im Falle einer Druckbelastung vom Fahrerhaus auf den Rahmen kann dann der zweite Dämpfer, da dieser nun auf Zug belastete wird, die dämpfende Wirkung übernehmen, während der erste Dämpfer nun im Wesentlichen unwirksam sein kann. Anstelle des eben beschriebenen entgegengesetzten Einbaus kann die alternierende Dämpfung des ersten und zweiten Dämpfers allerdings auch durch eine unterschiedliche Ansteuerung der Dämpfungscharakteristik und/oder entsprechende mechanische Umlenkungen realisiert werden. Auf vorteilhafte Weise kann so auch mit im Wesentlichen nur in einer Belastungsrichtung wirkenden Dämpfern eine schnelle Dämpfung von unerwünschten Fahrerhausbewegungen erreicht werden.

Gemäß einem weiteren Aspekt der Erfindung kann die Fahrerhauslagerung keinen mechanischen Stabilisator, vorzugsweise keinen mechanischen Stabilisator in Form einer Drehstabfeder zur Wank- und/oder Nickstabilisierung, umfassen. Mit anderen Worten kann die Fahrerhauslagerung stabilisatorfrei ausgeführt sein. Vorzugsweise wird damit die Wank- und/oder Nicksteifigkeit der Fahrerhauslagerung allein über die Dämpfungskraft der mindestens vier Dämpfereinrichtungen bestimmt. Zudem oder alternativ können die Dämpfereinrichtungen auch derart angesteuert werden, dass sie die Funktion eines mechanischen Stabilisators übernehmen. Hierzu kann beispielsweise die Wanksteifigkeit durch entsprechendes Vergrößern der Dämpferkraft der Dämpfereinrichtungen erhöht werden. Auf vorteilhafte Weise können mit dem Wegfall des Stabilisators Bauraum und Gewicht bei der Fahrerhauslagerung eingespart werden. Ferner können mit der erfindungsgemäßen Lösung Wank- und/oder Nickbewegungen auch schneller unterdrückt werden, da übliche Stabilisatoren bzw. Drehstabfedern zunächst eine gewisse Verdrehung, d. h. einen gewissen Federweg, benötigen, um eine Gegenkraft aufzubauen. Dies entfällt im Falle einer entsprechenden, vorzugsweise sogar vorausschauenden, aktiven Ansteuerung der jeweiligen Dämpfereinrichtungen.

Nach einem weiteren Aspekt der Erfindung kann die Fahrerhauslagerung eine Steuereinrichtung umfassen, die ausgebildet ist, auf Basis von Daten einer Sensoreinrichtung eine Fahrerhausbewegung, z. B. eine Wank-, Nick-, Hub- und/oder Senkbewegung des Fahrerhauses, zu ermitteln. Die Sensoreinrichtung kann hierzu beispielsweise einen Beschleunigungssensor, einen Lenkwinkelsensor, einen Gierratensensor und/oder einen Wegsensor umfassen. Vorzugsweise handelt es sich bei der Fahrerhausbewegung um eine Zustandsänderung des Fahrerhauses. D. h., anstelle einer statischen Fahrerhausorientierungen - z. B. eine zeitlich konstante Seitenneigung aufgrund ungleicher Beladungen - kann vorliegend eine Änderung aus einer aktuellen Ruheposition des Fahrerhauses ermittelt werden. Weiterhin kann die Steuereinrichtung zur Dämpfung der ermittelten Fahrerhausbewegung ausgebildet sein, die Dämpferkraft der Dämpfereinrichtungen anzupassen. Beispielsweise kann die Steuereinrichtung hierzu ausgebildet sein, Schalt- und/oder Proportionalventile innerhalb der Dämpfereinrichtungen zu öffnen und/oder zu schließen. Zudem oder alternativ kann die Steuereinrichtung - speziell im Fall von Dämpfereinrichtungen mit elektro- und/oder magnetorheologischen Flüssigkeiten - auch ausgebildet sein, elektromagnetische Felder innerhalb der Dämpfereinrichtungen zu generieren und/oder abzubauen. Vorzugsweise unterdrückt die entsprechend eingestellte Dämpferkraft der Dämpfereinrichtungen möglichst schnell und effektiv die ermittelte Fahrerhausbewegung, wobei dem Fachmann für die exakte Art und Weise der Ansteuerung der Dämpfereinrichtungen, die zum Teil im Folgenden noch eingehender beschrieben wird, mehrere Möglichkeiten ersichtlich sind. Auf vorteilhafte Weise ermöglicht es dieser Aspekt der Erfindung schnell unerwünschte Fahrerhausbewegungen zu unterbinden und dabei auf raumeinnehmende Bauteile - darunter einen Stabilisator - zu verzichten.

Gemäß einer Weiterbildung dieses Aspekts kann die Sensoreinrichtung in einem Dachbereich, beispielsweise der Dachunterseite, des Fahrerhauses angeordnet sein. Mit anderen Worten kann die Sensoreinrichtung an einer von den Dämpfereinrichtungen und/oder den Auflagestellen des Fahrerhauses auf dem Rahmen möglichst entfernt liegenden Stelle angeordnet sein. Da die Fahrerhausbewegungen, d. h. genauer die Auslenkungen des Fahrerhauses aus der Ruhelage, mit steigendem Abstand von den Auflagestellen des Fahrerhauses auf dem Rahmen zunehmen, kann so auf vorteilhafte Weise ein genaues Erfassen auch geringfügiger und/oder noch im Entstehen begriffener Bewegungen des Fahrerhauses erreicht werden. Vorzugsweise kann die Sensoreinrichtung dabei an einer möglichst zentralen und/oder mittigen Stelle des Dachbereichs angeordnet sein und/oder von allen Dämpfereinrichtungen möglichst gleichweit beabstandet sein.

Um das Auftreten von Fahrerhausbewegungen möglichst schnell zu erfassen, kann nach einem weiteren Aspekt der Erfindung die Sensoreinrichtung und/oder Steuereinrichtung ferner eine zeitliche Änderung einer Beschleunigung, vorzugsweise einen Beschleunigungsänderungsvektor mit Komponenten einer zeitlichen Änderung einer Beschleunigung in jeweils drei zueinander senkrechten Raumrichtungen, ermitteln. Anders ausgedrückt kann somit ein Ruck, d. h. die zeitliche Ableitung einer Beschleunigung, ermittelt werden. Dies ermöglicht auf vorteilhafte Weise plötzlich auftretende Bewegungen des Fahrerhauses schneller und zuverlässiger zu erkennen, als dies bei der Detektion einer Beschleunigung der Fall wäre. Zudem oder alternativ kann die Sensoreinrichtung und/oder Steuereinrichtung allerdings auch eine Beschleunigung, vorzugsweise einen Beschleunigungsvektor mit Komponenten einer Beschleunigung in jeweils drei zueinander senkrechten Raumrichtungen, ermitteln.

Gemäß einem weiteren Aspekt der Erfindung kann die Steuereinrichtung ausgebildet sein, basierend auf der ermittelten Bewegung diejenigen Dämpfereinrichtungen zu ermitteln, die einer Zugbelastung vom Fahrerhaus auf den Rahmen ausgesetzt sind, und deren Dämpferkraft zur Dämpfung einer Zugbelastung vom Fahrerhaus auf den Rahmen anzupassen. Zudem oder alternativ kann die Steuereinrichtung auch ausgebildet sein, basierend auf der ermittelten Bewegung diejenigen Dämpfereinrichtungen zu ermitteln, die einer Druckbelastung vom Fahrerhaus auf den Rahmen ausgesetzt sind und deren Dämpferkraft zur Dämpfung einer Druckbelastung vom Fahrerhaus auf den Rahmen anzupassen. Als "*Anpassen*" der Dämpferkraft kann dabei in der Regel ein Erhöhen der Dämpferkraft, d. h. das Einstellen einer straffen Dämpfung, in der entsprechenden Belastungsrichtung verstanden werden. Im obigen Ausführungsbeispiel mit zwei entgegengesetzt wirkenden Dämpfern pro Dämpfereinrichtung kann das "*Anpassen*" der Dämpferkraft allerdings - wie im Folgenden noch genauer ausgeführt - auch ein Erniedrigen der Dämpferkraft eines Dämpfers umfassen. Während beispielsweise der erste Dämpfer "*hart*" auf Zug eingestellt wird, kann der zweite - um 180° gedreht verbaute - Dämpfer "*weich*" auf Zug eigestellt werden, um der vorrangigen Dämpfung des ersten Dämpfers möglichst wenig entgegenzuwirken. Der Vorteil des gezielten Ermittelns der Druck- bzw. Zugbelastung der jeweiligen Dämpfereinrichtungen liegt darin, dass dadurch möglichst optimal auf die ermittelten Fahrerhausbewegungen reagiert werden kann und so Fahrerhausbewegungen schnell und zuverlässig unterbunden werden können.

Nach einem weiteren Aspekt der Erfindung kann die Fahrerhauslagerung vier Dämpfereinrichtungen umfassen, die in Form eines Vierecks angeordnet sind, wobei zwei der Dämpfereinrichtungen links und zwei der Dämpfereinrichtungen rechts einer Fahrzeuglängsachse angeordnet sein können. Vorzugsweise sind die vier Dämpfereinrichtungen in Form eines konvexen Vierecks, beispielsweise in Form eines Rechtecks, Quadrats, Trapezes und/oder einer Raute, angeordnet. Ferner kann die Steuereinrichtung ausgebildet sein, in einem ersten Betriebsmodus ein Paar der Dämpfereinrichtungen zur Dämpfung einer Druckbelastung und ein Paar der Dämpfereinrichtungen zur Dämpfung einer Zugbelastung, anzupassen. Mit anderen Worten kann die Steuereinrichtung ausgebildet sein, die Dämpferkraft der Dämpfereinrichtungen paarweise unterschiedlich anzupassen. Dabei kann das Anpassen der Dämpferkraft der verschiedenen Dämpfereinrichtungen vorzugsweise im Wesentlichen gleichzeitig erfolgen. Ferner kann das Paar Dämpfereinrichtungen zwei benachbarte oder zwei diagonal gegenüberliegende Dämpfereinrichtungen umfassen. Auf vorteilhafte Weise wird dadurch eine einfache und zuverlässige Dämpfung unerwünschter Fahrerhausbewegungen erreicht.

Gemäß einer Weiterbildung dieses Aspekts der Erfindung kann eine Auswahl der Paare in Abhängigkeit der von der Steuereinrichtung ermittelten Fahrerhausbewegung erfolgen. So können zur Dämpfung von Wankbewegungen des Fahrerhauses zwei links bzw. rechts der Fahrzeuglängsachse gelegene Dämpfereinrichtungen ausgewählt werden, während zur Dämpfung einer Nickbewegung des Fahrerhauses zwei in Fahrtrichtung vorne bzw. hinten gelegene Dämpfereinrichtungen ausgewählt werden können. Auf vorteilhafte Weise können dadurch insbesondere Nick- und Wankbewegungen des Fahrerhauses möglichst schnell unterbunden werden. Zudem kann gerade im Fall kombinierter Nick-Wank-Bewegungen durch die Paarung diagonal gegenüberliegender Dämpfereinrichtungen ohne eine zusätzliche Kopplung der Dämpfereinrichtungen über einen Stabilisator eine besonders vorteilhafte Fahrerhausdämpfung erreicht werden.

Nach einem weiteren Aspekt der Erfindung kann eine von der jeweiligen Dämpfereinrichtung aufbringbare und/oder einstellbare maximale Dämpfungskraft unter Zug- und Druckbelastung im Wesentlichen gleich sein. Mit anderen Worten kann die Dämpfung der jeweiligen Dämpfereinrichtungen in der Druckstufe im Wesentlichen wie die Dämpfung in der Zugstufe einstellbar sein, wobei der Verlauf der Dämpferkraft in Zug- und Druckrichtung durchaus unterschiedliche sein kann. Auf vorteilhafte Weise wird dadurch sichergestellt, dass Zug- und Druckbelastungen vom Fahrerhaus auf den Rahmen nach Möglichkeit gleich gut gedämpft werden können und dadurch unerwünschte Fahrerhausbewegungen möglichst optimal und schnell unterbunden werden können.

Gemäß einem weiteren Aspekt der Erfindung kann die Dämpfungskraft der Dämpfereinrichtung vorausschauend eingestellt werden. Mit anderen Worten kann die Dämpfungskraft bereits vor dem tatsächlichen Auftreten einer Fahrerhausbewegung, vorzugsweise zur Vermeidung einer zu erwartenden Fahrerhausbewegung, eingestellt werden. Hierzu kann die Steuereinrichtung über fahrzeugintern, z. B. mittels eines Kamerasystems, und/oder fahrzeugextern, z. B. über GPS-Daten, bereitgestellte Informationen, betreffend den Straßenverlauf, die Fahrbahnbeschaffenheit und/oder anstehender Fahrmanöver des Nutzfahrzeugs, und/oder unter Verwendung entsprechende Modelle und/oder Simulationen eine zu erwartende Fahrerhausbewegung ermitteln. Basierend auf dieser ermittelten zu erwartenden Fahrerhausbewegung kann dann die Dämpfungskraft der Dämpfereinrichtung vorausschauend eingestellt werden. Auf vorteilhafte Weise kann dadurch der Regelungsbedarf reduzieren werden, da starke Auslenkungen des Fahrerhauses aus der Ruhelage bereits von Grund auf vermieden werden können.

Ferner wird erfindungsgemäß ein Verfahren zur Einstellung einer Dämpfung einer Fahrerhauslagerung eines Nutzfahrzeugs bereitgestellt. Die Fahrerhauslagerung umfasst dabei mindestens vier zwischen dem Fahrerhaus und einem Rahmen des Nutzfahrzeugs angeordnete Dämpfereinrichtungen, die jeweils separat in ihrer Dämpfungskraft einstellbar sind. Zusätzlich ist jede der Dämpfereinrichtungen ausgebildet, sowohl Zug- als auch Druckbelastung vom Fahrerhaus auf den Rahmen zu dämpfen. Ferner kann die im Rahmen des Verfahrens verwendete Fahrerhauslagerung auch alle Merkmale der Fahrerhauslagerung aufweisen, die in diesem Dokument bereits beschrieben wurden. D. h., die vorrichtungsgemäß offenbarten Merkmale der einen Fahrerhauslagerung sollen somit auch im Zusammenhang mit dem Verfahren offenbart und beanspruchbar sein.

Erfindungsgemäß umfasst das Verfahren dabei die folgenden Schritte. Ermitteln welche der Dämpfereinrichtungen einer Zugbelastung vom Fahrerhaus auf den Rahmen und welche einer Druckbelastung vom Fahrerhaus auf den Rahmen ausgesetzt sind. Dies kann beispielsweise auf Basis von Daten einer Sensoreinrichtung, vorzugsweise eines Beschleunigungssensors, erfolgen. Ferner umfasst das Verfahren das Anpassens der Dämpferkraft der Dämpfereinrichtungen, die einer Zugbelastung vom Fahrerhaus auf den Rahmen ausgesetzt sind, zur Dämpfung einer Zugbelastung vom Fahrerhaus auf den Rahmen und/oder das Anpassen der Dämpferkraft der Dämpfereinrichtungen, die einer Druckbelastung vom Fahrerhaus auf den Rahmen ausgesetzt sind, zur Dämpfung einer Druckbelastung vom Fahrerhaus auf den Rahmen. Der Ausdruck "*Anpassen*" kann hierbei eine Veränderung der Dämpfercharakteristik, beispielsweise ein Erhöhen oder Erniedrigen der Dämpferkraft für Zugbelastungen und/oder ein Erhöhen oder Erniedrigen der Dämpferkraft für Druckbelastungen, umfassen. Das Anpassen kann ferner stufenlos oder auch mehrstufig erfolgen.

Ferner wird erfindungsgemäß auch ein Nutzfahrzeug mit einer Fahrerhauslagerung, wie in diesem Dokument beschrieben, bereitgestellt.

Weitere Einzelheiten und Vorteile der Erfindung werden im Folgenden unter Bezugnahme auf die beigefügten Zeichnungen beschrieben. Es zeigen:
- Figur 1:: eine stark schematisierte 3D-Darstellung einer Fahrerhauslagerung für ein Nutzfahrzeug gemäß einer Ausführungsform der Erfindung;
- Figur 2:: eine Seitenansicht einer Fahrerhauslagerung für ein Nutzfahrzeug gemäß einer weiteren Ausführungsform der Erfindung;
- Figur 3:: eine stark schematisierte 3D-Darstellung eines Teils der Fahrerhauslagerung für ein Nutzfahrzeug inklusive verschiedener auf das Fahrerhaus wirkende Beschleunigungen;
- Figur 4:: eine Flussdiagramm eines Verfahrens zur Einstellung einer Dämpfung einer Fahrerhauslagerung eines Nutzfahrzeugs; und
- Figur 5:: eine schematische Darstellung eines Nutzfahrzeugs gemäß einer Ausführungsform der Erfindung.

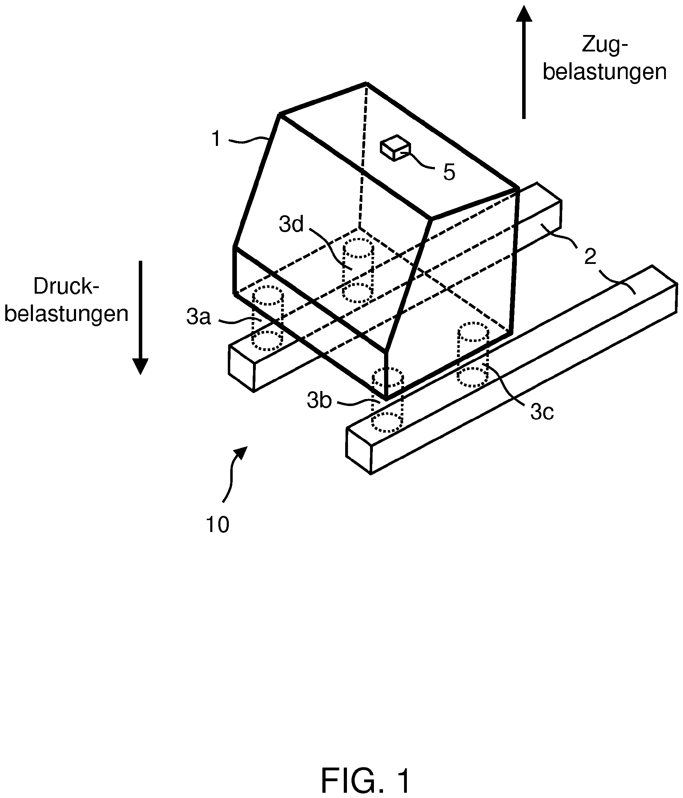

Figur 1 zeigt eine stark schematisierte 3D-Darstellung einer Fahrerhauslagerung 10 für ein Nutzfahrzeug 20 gemäß einer Ausführungsform der Erfindung. Die Fahrerhauslagerung 10 umfasst dabei vier zwischen dem Fahrerhaus 1 und einem Rahmen 2 des Nutzfahrzeugs 20 - im Bereich der bodennahen Fahrerhausecken - angeordnete Dämpfereinrichtungen 3a, 3b, 3c, 3d. Die Dämpfereinrichtungen 3a, 3b, 3c, 3d, welche Teil einer nicht näher dargestellten Vier-Punkt-Lagerung des Fahrerhauses 1 sind, sind hierbei jeweils separat in ihrer Dämpfungskraft diskret oder stufenlos einstellbar. Vorzugsweise wirken die hydraulische, hydro-pneumatische und/oder pneumatische Dämpfer umfassenden Dämpfereinrichtungen 3a, 3b, 3c, 3d dabei auch mit federnden Elementen zusammen und/oder sind als ein kombiniertes Bauteil mit federnden und dämpfenden Funktionen ausgebildet. Besonders bevorzugt sind die vier Dämpfereinrichtungen 3a, 3b, 3c, 3d dabei jeweils Teil eines Luftfederdämpfermoduls, so dass zusätzlich auch eine Niveauregulierung des Fahrerhauses 1 ermöglicht wird, um beispielsweise bei Standzeiten des Nutzfahrzeugs 20 eine waagrechte Schlafposition des Fahrerhauses 1 einnehmen zu können.

Erfindungsgemäß ist nun vorgesehen, dass jede der Dämpfereinrichtungen 3a, 3b, 3c, 3d ausgebildet ist, sowohl Zug- als auch Druckbelastung vom Fahrerhaus 1 auf den Rahmen 2 zu dämpfen. Dabei sind in Figur 1 die Richtungen, in denen die entsprechenden Belastungen im Wesentlichen an den Dämpfereinrichtungen 3a, 3b, 3c, 3d angreifen, jeweils durch Pfeile verdeutlicht. Dadurch, dass die Dämpfereinrichtungen 3a, 3b, 3c, 3d somit beide Belastungsarten dämpfen können, kann auf vorteilhafte Weise eine möglichst schnelle Dämpfung von unerwünschten Fahrerhausbewegungen 1 erreicht werden.

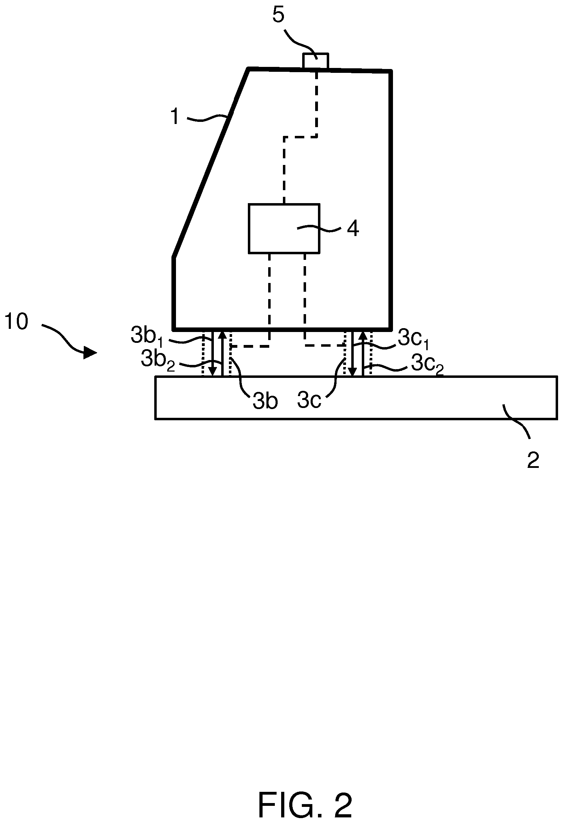

Figur 2 zeigt eine Seitenansicht einer Fahrerhauslagerung 10 für ein Nutzfahrzeug 20 gemäß einer weiteren Ausführungsform der Erfindung. Hierbei umfassen die vier Dämpfereinrichtungen 3a, 3b, 3c, 3d (von welchen in der Seitenansicht nur die Dämpfereinrichtungen 3b und 3c sichtbar sind) jeweils zwei baugleiche Dämpfer 3a₁, 3a₂, 3bi, 3b₂, 3c₁, 3c₂, 3di, 3d₂, die im Folgenden zur besseren Unterscheidbarkeit als erster Dämpfer 3a₁, 3b₁, 3c₁, 3d₁ und zweiter Dämpfer 3a₂, 3b₂, 3c₂, 3d₂ bezeichnet werden. Die beiden Dämpfer 3a₁, 3a₂, 3bi, 3b₂, 3c₁, 3c₂, 3d₁, 3d₂ pro Dämpfereinrichtung 3a, 3b, 3c, 3d sind vorliegend entgegengesetzt, d. h. um 180° gedreht zueinander, zwischen Fahrerhaus 1 und Rahmen 2 montiert, was durch die beiden Pfeilrichtungen im Figur 2 veranschaulicht wird. Ferner sind die Dämpfer 3a₁, 3a₂, 3b₁, 3b₂, 3c₁, 3c₂, 3di, 3d₂ jeweils in erster Linie auf die Dämpfung einer lokal auf den jeweiligen Dämpfer 3a₁, 3a₂, 3b₁, 3b₂, 3c₁, 3c₂, 3di, 3d₂ wirkenden Zugbelastung optimiert. Diese lokal auf den jeweiligen Dämpfer 3a₁, 3a₂, 3b₁, 3b₂, 3c₁, 3c₂, 3di, 3d₂ wirkende Belastung ist dabei von der insgesamt auf die gesamte Dämpfereinrichtung 3a, 3b, 3c, 3d wirkenden Belastung zu unterscheiden. So kann eine Druckbelastung vom Fahrerhaus 1 auf den Rahmen 2 je nach Einbaulage des ersten Dämpfers 3a₁, 3b₁, 3c₁, 3d₁ sowohl zu einer lokalen Druck- oder Zugbelastung führen. In der vorliegenden Ausführungsform soll - ohne dass damit eine Einschränkung verbunden wäre - eine Druckbelastung vom Fahrerhaus 1 auf den Rahmen 2 bei den jeweils ersten Dämpfern 3a₁, 3b₁, 3c₁, 3d₁ der Dämpfereinrichtungen 3a, 3b, 3c, 3d ebenfalls zu einer lokalen Druckbelastung führen, während die jeweils zweiten Dämpfer 3a₂, 3b₂, 3c₂, 3d₂ bei einer Druckbelastung vom Fahrerhaus 1 auf den Rahmen 2 aufgrund ihres invertierten Einbaus lokal auf Zug, d. h. in ihrer bevorzugten Betriebsrichtung, belastet werden. Durch entsprechendes Verändern der jeweiligen Dämpfungskraft des ersten bzw. zweiten Dämpfers 3a₁, 3a₂, 3bi, 3b₂, 3c₁, 3c₂, 3di, 3d₂ können somit im Zusammenspiel der Dämpfer 3a₁, 3a₂, 3bi, 3b₂, 3c₁, 3c₂, 3d₁, 3d₂ sowohl Zug- als auch Druckbelastungen an der Dämpfereinrichtungen 3a, 3b, 3c, 3d effektiv gedämpft werden, obwohl die einzelnen Dämpfer möglicherweise eine stark asymmetrische Dämpfercharakteristik in Druck- und Zugrichtung oder im Wesentlichen nur eine Vorzugsrichtung (vorliegend die Zugrichtung) aufweisen.

Ferner umfasst die Fahrerhauslagerung 10 eine Steuereinrichtung 4, die ausgebildet ist, auf Basis von Daten einer Sensoreinrichtung 5 eine Fahrerhausbewegung, z. B. eine Wank-, Nick-, Hub- und/oder Senkbewegung des Fahrerhauses 1, zu ermitteln und die Dämpferkraft der Dämpfer 3a₁, 3a₂, 3bi, 3b₂, 3c₁, 3c₂, 3d₁, 3d₂ zur Dämpfung der ermittelten Fahrerhausbewegung anzupassen. Vorliegend handelt es sich bei der Sensoreinrichtung 5 um einen Beschleunigungssensor, der im Dachbereich des Fahrerhauses 1 angeordnet ist und ferner einen Beschleunigungsvektor mit Komponenten einer Beschleunigung in jeweils drei zueinander senkrechten Raumrichtungen ermitteln kann. Vorzugsweise sind dabei die drei Raumrichtungen entlang der Längs-, Quer- und Hochachse des Nutzfahrzeugs orientiert. Auf Basis des von der Sensoreinrichtung 5 ermittelten Beschleunigungsvektors nimmt die Steuereinrichtung 4 eine Anpassung der Dämpferkraft der einzelnen Dämpfer 3a₁, 3a₂, 3bi, 3b₂, 3c₁, 3c₂, 3d₁, 3d₂ vor, wobei in einem ersten Schritt zunächst festgestellt wird, welche der Dämpfereinrichtungen 3a, 3b, 3c, 3d einer Zugbelastung vom Fahrerhaus 1 auf den Rahmen 2 und welche einer Druckbelastung vom Fahrerhaus 1 auf den Rahmen 2 ausgesetzt sind. Wird hierbei festgestellt, dass beispielsweise die Dämpfereinrichtung 3b einer Druckbelastung vom Fahrerhaus 1 auf den Rahmen 2 ausgesetzt ist (z. B. im Zuge einer Nickbewegung des Fahrerhauses 1), so wird im vorliegenden Beispiel anschließend die Dämpferkraft des ersten (auf Druck belasteten) Dämpfers 3b₁ der Dämpfereinrichtung 3b weich auf Zugbelastungen eingestellt, während die Dämpferkraft des zweiten - entgegengesetzt montierten und auf Zug belasteten - Dämpfers 3b₂ der Dämpfereinrichtung 3b hart auf Zugbelastung eingestellt wird. Anders ausgedrückt wirkt im Falle einer Druckbelastung vom Fahrerhaus 1 auf den Rahmen 2 vor allem der zweite Dämpfer und im Falle einer Zugbelastung vom Fahrerhaus 1 auf den Rahmen 2 vor allem der erste Dämpfer dämpfend. Insgesamt wird durch dieses Zusammenspiel der beiden Dämpfer eine optimale Dämpfung der an der Dämpfereinrichtung 3b beispielhaft wirkenden Druckbelastung erreicht.

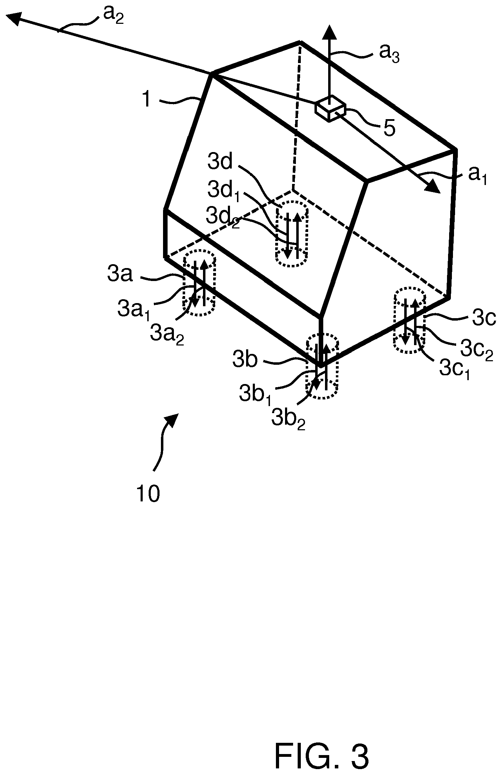

Während bislang die Einstellung der Dämpferkraft der einzelnen Dämpfer 3a₁, 3a₂, 3b₁, 3b₂, 3c₁, 3c₂, 3d₁, 3d₂ an den jeweiligen Dämpfereinrichtungen 3a, 3b, 3c, 3d eingehender beschrieben wurde, soll im Folgenden unter Bezug auf Figur 3 auch das Feststellen, welche der Dämpfereinrichtungen 3a, 3b, 3c, 3d einer Zugbelastung vom Fahrerhaus 1 auf den Rahmen 2 und welche einer Druckbelastung vom Fahrerhaus 1 auf den Rahmen 2 ausgesetzt sind, näher betrachtet werden. Figur 3 zeigt hierzu in einer stark schematisierten 3D-Darstellung einen Teil der Fahrerhauslagerung 10 mit vier zwischen dem Fahrerhaus 1 und einem Rahmen 2 des Nutzfahrzeugs 20 - im Bereich der bodennahen Fahrerhausecken - angeordnete Dämpfereinrichtungen 3a, 3b, 3c, 3d, die jeweils zwei baugleiche Dämpfer 3a₁, 3a₂, 3b₁, 3b₂, 3c₁, 3c₂, 3d₁, 3d₂ umfassen, die entgegengesetzt, d. h. um 180° gedreht zueinander, zwischen Fahrerhaus 1 und Rahmen 2 montiert sind. Weiterhin umfasst die Fahrerhauslagerung 10 eine nicht näher dargestellte Steuereinrichtung 4, die ausgebildet ist, auf Basis von Daten eines im Dachbereich des Fahrerhauses 1 angeordneten Beschleunigungssensors eine Wank-, Nick-, Hub- und/oder Senkbewegung des Fahrerhauses 1 zu ermitteln und die Dämpferkraft der Dämpfereinrichtungen 3a, 3b, 3c, 3d entsprechend anzupassen.

Hierzu sind vorliegend in Figur 3 drei verschiedene auf das Fahrerhaus wirkende Beschleunigungen in Form von drei Beschleunigungsvektoren a₁, a₂, a₃ dargestellt. Der erste Beschleunigungsvektor a₁ entspricht dabei einer Querbeschleunigung des Fahrerhauses 1 bezogen auf die Fahrtrichtung. Die hieraus resultierende Bewegung des Fahrerhauses 1 wäre eine Wank-bewegung bei der die Dämpfereinrichtungen 3b und 3c auf Druck und die beiden Dämpfereinrichtungen 3a und 3d auf Zug belastet würden. Dies wird vorliegend von der Steuereinrichtung 4 auf Basis des von der Sensoreinrichtung 5 erfassten Beschleunigungsvektors und der Position der Dämpfereinrichtungen 3a, 3b, 3c, 3d in Bezug auf den Schwerpunkt des Fahrerhauses ermittelt. Entsprechend würde im Fall der ersten Beschleunigung die Steuereinrichtung 4 das bezogen auf die Fahrtrichtung linke Dämpfereinrichtungspaar 3b und 3c "*hart auf Druck*" und das rechte Dämpfereinrichtungspaar 3a und 3d "*hart auf Zug*" ansteuern. D. h., die Dämpferkraft der Dämpfereinrichtungen 3b und 3c würde in Druckstufe erhöht und die Dämpferkraft der Dämpfereinrichtungen 3b und 3c in Zugstufe erhöht werden. Das Einstellen der entsprechenden Dämpfung der einzelnen Dämpfereinrichtungen 3a, 3b, 3c, 3d kann intern dabei - wie zuvor bei Figur 2 beschrieben - jedoch sowohl mit einem Verändern der Druck- als auch Zugstufe des ersten und zweiten Dämpfers 3a₁, 3a₂, 3b₁, 3b₂, 3c₁, 3c₂, 3d₁, 3d₂ verbunden sein.

Der zweite Beschleunigungsvektor a₂ entspricht einer - bezogen auf die Fahrtrichtung - nach rechts vorne gerichtete Beschleunigung, die in einer kombinierten Nick-Wank-Bewegung des Fahrerhauses 1 resultieren würde, bei der die Dämpfereinrichtung 3a stark auf Druck, die Dämpfereinrichtung 3b leicht auf Zug, die Dämpfereinrichtung 3c stark auf Zug und die Dämpfereinrichtung 3d leicht auf Druck beansprucht würde. Zum entsprechenden Einstellen der Dämpferkraft der einzelnen Dämpfereinrichtungen 3a, 3b, 3c, 3d kann die Steuereinrichtung 4 den von der Sensoreinrichtung 5 erfassten Beschleunigungsvektor a₂ in seine einzelnen Komponenten entlang der Längs-, Quer- und Hochachse des Nutzfahrzeugs 20 zerlegen und proportional zu diesen Komponenten ansteuern. Vorliegend würde daher die Dämpfereinrichtungen 3a "*hart auf Druck*" und die Dämpfereinrichtungen 3c "*hart auf Zug"* ansteuert werden, während die Dämpfereinrichtungen 3b und 3d weniger stark ausgesteuert werden. Für die Dämpfereinrichtungen 3b würde daher eine mittlere Dämpfkraft in Zugrichtung und für die Dämpfereinrichtungen 3d eine mittlere Dämpfkraft in Druckrichtung resultieren.

Der dritte Beschleunigungsvektor a₃ entspricht einer nach oben gerichtete Beschleunigung, die sich beispielsweise im Zuge des Überfahrens einer Bodenwelle ergeben würde, und hat eine Hubbewegung des Fahrerhauses 1 zur Folge. In diesem Fall werden alle vier Dämpfereinrichtungen 3a, 3b, 3c, 3d gleichmäßig auf Zug belastet, weshalb die Steuereinrichtung 4 die Dämpfungskraft aller vier Dämpfereinrichtungen 3a, 3b, 3c, 3d in Zugstufe erhöht. Insgesamt kann durch das gezielte Ermitteln der Druck- bzw. Zugbelastung der jeweiligen Dämpfereinrichtungen 3a, 3b, 3c, 3d somit möglichst optimal auf unerwünschte Fahrerhausbewegungen reagiert werden und dadurch Fahrerhausbewegungen schnell und zuverlässig unterbunden werden.

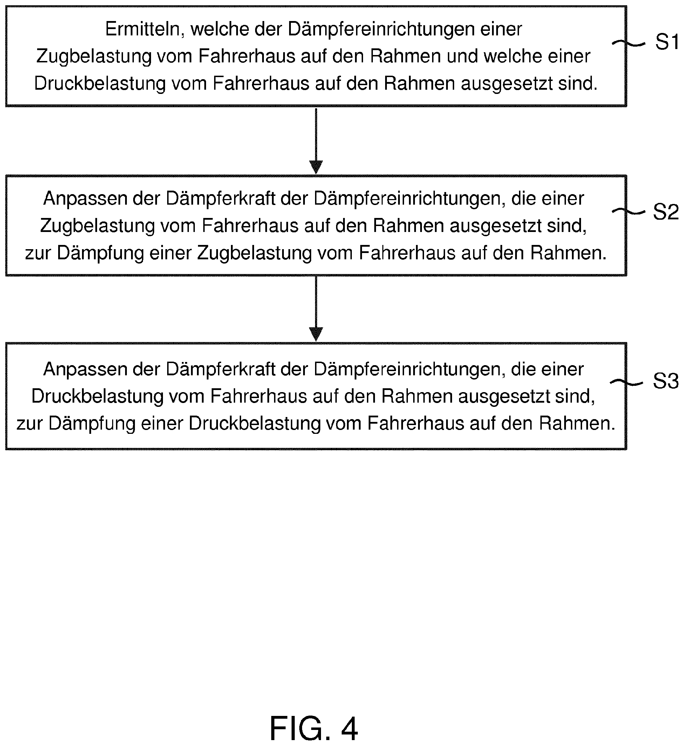

Figur 4 zeigt ein Flussdiagramm eines Verfahrens zur Einstellung einer Dämpfung einer Fahrerhauslagerung 10 eines Nutzfahrzeugs 20. Die Fahrerhauslagerung 10 umfasst dabei mindestens vier zwischen dem Fahrerhaus 1 und einem Rahmen 2 des Nutzfahrzeugs 20 angeordnete Dämpfereinrichtungen 3a, 3b, 3c, 3d, die jeweils separat in ihrer Dämpfungskraft einstellbar sind. Zusätzlich ist jede der Dämpfereinrichtungen 3a, 3b, 3c, 3d ausgebildet, sowohl Zug- als auch Druckbelastung vom Fahrerhaus 1 auf den Rahmen 2 zu dämpfen. Als Zugbelastung kann hierbei eine im Wesentlichen entgegen der Schwerkraftrichtung gerichtete Kraft des Fahrerhauses auf den Rahmen und als Druckbelastung eine im Wesentlichen in Schwerkraftrichtung gerichtete Kraft des Fahrerhauses auf den Rahmen verstanden werden.

Im Schritt S1 erfolgt zunächst ein Ermitteln, welche der Dämpfereinrichtungen 3a, 3b, 3c, 3d einer Zugbelastung vom Fahrerhaus 1 auf den Rahmen 2 und welche einer Druckbelastung vom Fahrerhaus 1 auf den Rahmen 2 ausgesetzt sind. Dies kann beispielsweise auf Basis von Daten einer Sensoreinrichtung 5, vorzugsweise eines Beschleunigungssensors, wie zuvor bei Figur 3 beschrieben, erfolgen. Im Schritt S2 wird die Dämpferkraft der Dämpfereinrichtungen 3a, 3b, 3c, 3d, die einer Zugbelastung vom Fahrerhaus 1 auf den Rahmen 2 ausgesetzt sind, zur Dämpfung einer Zugbelastung vom Fahrerhaus 1 auf den Rahmen 2 angepasst. Beispielsweise können hierzu Schalt- und/oder Proportionalventile innerhalb der Dämpfereinrichtungen 3a, 3b, 3c, 3d geöffnet und/oder geschlossen werden. Bzw. im Fall von Dämpfereinrichtungen 3a, 3b, 3c, 3d mit elektro- und/oder magnetorheologischen Flüssigkeiten elektromagnetische Felder innerhalb der Dämpfereinrichtungen 3a, 3b, 3c, 3d generieret und/oder abgebaut werden. Die Anpassung kann dabei stufenlos oder mehrstufig erfolgen. Im Schritt S3 erfolgt dann ein Anpassen der Dämpferkraft der Dämpfereinrichtungen 3a, 3b, 3c, 3d, die einer Druckbelastung vom Fahrerhaus 1 auf den Rahmen 2 ausgesetzt sind, zur Dämpfung einer Druckbelastung vom Fahrerhaus 1 auf den Rahmen 2. Das Anpassen kann dabei wiederum wie unter Schritt S2 beschrieben durch Öffnen und/oder Schließen von Ventilen bzw. durch Generieren und/oder Abbauen elektrischer Felder innerhalb der Dämpfereinrichtungen 3a, 3b, 3c, 3d erfolgen. Ferner kann unter dem Anpassen der Dämpferkraft ein Erhöhen oder Erniedrigen der Dämpferkraft der in den Dämpfereinrichtungen 3a, 3b, 3c, 3d verbauten Dämpfer umfassen.

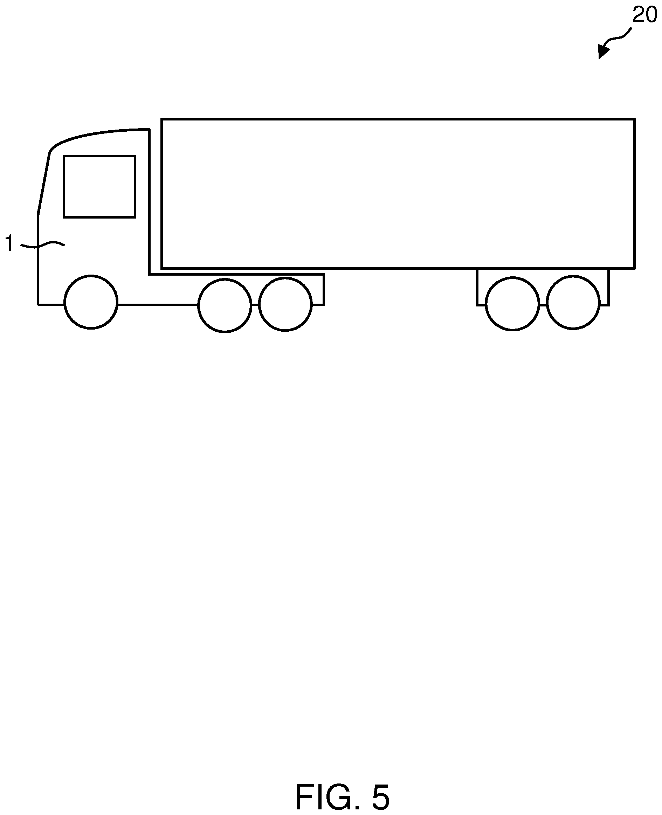

Figur 5 zeigt eine schematische Darstellung eines Nutzfahrzeugs 20 gemäß einer Ausführungsform der Erfindung. Vorliegend handelt es sich bei dem Nutzfahrzeug 20 um einen Lastkraftwagen mit einer Fahrerhauslagerung 10 wie zuvor beschrieben.

### Bezugszeichenliste

- 1: Fahrerhaus
- 2: Rahmen
- 3a-3d: Dämpfereinrichtungen
- 3a₁-3d₁: Erster Dämpfer
- 3a₂-3d₂: Zweiter Dämpfer
- 4: Steuereinrichtung
- 5: Sensoreinrichtung
- 10: Fahrerhauslagerung
- 20: Nutzfahrzeug
- a₁: Erster Beschleunigungsvektor
- a₂: Zweiter Beschleunigungsvektor
- a₃: Dritter Beschleunigungsvektor

## Patentansprüche

1. Fahrerhauslagerung (10) für ein Nutzfahrzeug (20), umfassend mindestens vier zwischen dem Fahrerhaus (1) und einem Rahmen (2) des Nutzfahrzeugs (20) angeordnete Dämpfereinrichtungen (3a, 3b, 3c, 3d), die jeweils separat in ihrer Dämpfungskraft einstellbar sind, wobei jede der Dämpfereinrichtungen (3a, 3b, 3c, 3d) ausgebildet ist, sowohl Zug- als auch Druckbelastung vom Fahrerhaus (1) auf den Rahmen (2) zu dämpfen; **dadurch gekennzeichnet, dass** jede Dämpfereinrichtung (3a, 3b, 3c, 3d) einen ersten und zweiten Dämpfer (3a₁, 3b₁, 3c₁, 3d₁; 3a₂, 3b₂, 3c₂, 3d₂) umfasst, die derart angeordnet sind, dass bei einer Zugbelastung vom Fahrerhaus (1) auf den Rahmen (2) im Wesentlichen der erste Dämpfer (3a₁, 3b₁, 3c₁, 3d₁) und bei einer Druckbelastung vom Fahrerhaus (1) auf den Rahmen (2) im Wesentlichen der zweite Dämpfer (3a₂, 3b₂, 3c₂, 3d₂) dämpfend wirkt.

2. Fahrerhauslagerung (10) nach einem der vorherigen Ansprüche, **dadurch gekennzeichnet,**
a) **dass** die Fahrerhauslagerung keinen mechanischen Stabilisator, vorzugsweise keinen mechanischen Stabilisator in Form einer Drehstabfeder zur Wank- und/oder Nickstabilisierung, umfasst und/oder
b) **dass** die Dämpfereinrichtungen (3a, 3b, 3c, 3d) derart angesteuert werden, dass sie die Funktion eines mechanischen Stabilisators übernehmen.

3. Fahrerhauslagerung (10) nach einem der vorhergien Ansprüche, **gekennzeichnet durch** eine Steuereinrichtung (4), die ausgebildet ist, auf Basis von Daten einer Sensoreinrichtung (5), vorzugsweise eines Beschleunigungssensors, eine Fahrerhausbewegung, vorzugsweise eine Zustandsänderung des Fahrerhauses, zu ermitteln sowie zur Dämpfung der ermittelten Fahrerhausbewegung, vorzugsweise eine Wank- und/oder Nickbewegung des Fahrerhauses, die Dämpferkraft der Dämpfereinrichtungen (3a, 3b, 3c, 3d) anzupassen.

4. Fahrerhauslagerung (10) nach Anspruch 3, **dadurch gekennzeichnet, dass** die Sensoreinrichtung (5) in einem Dachbereich des Fahrerhauses angeordnet ist.

5. Fahrerhauslagerung (10) nach Anspruch 3 oder 4, **dadurch gekennzeichnet, dass** die Sensoreinrichtung (5) und/oder Steuereinrichtung (4) eine zeitliche Änderung einer Beschleunigung, vorzugsweise einen Beschleunigungsänderungsvektor mit Komponenten einer zeitlichen Änderung einer Beschleunigung in jeweils drei zueinander senkrechten Raumrichtungen, ermittelt.

6. Fahrerhauslagerung (10) nach einem der Ansprüche 3 bis 5, **dadurch gekennzeichnet, dass** die Steuereinrichtung (4) ausgebildet ist, basierend auf der ermittelten Bewegung
a) diejenigen Dämpfereinrichtungen (3a, 3b, 3c, 3d) zu ermitteln, die einer Zugbelastung vom Fahrerhaus (1) auf den Rahmen (2) ausgesetzt sind, und deren Dämpferkraft zur Dämpfung einer Zugbelastung vom Fahrerhaus (1) auf den Rahmen (2) anzupassen; und/oder
b) diejenigen Dämpfereinrichtungen (3a, 3b, 3c, 3d) zu ermitteln, die einer Druckbelastung vom Fahrerhaus (1) auf den Rahmen (2) ausgesetzt sind und deren Dämpferkraft zur Dämpfung einer Druckbelastung vom Fahrerhaus (1) auf den Rahmen (2) anzupassen.

7. Fahrerhauslagerung (10) nach einem der Ansprüche 3 bis 6, **gekennzeichnet durch** vier Dämpfereinrichtungen (3a, 3b, 3c, 3d), die in Form eines Vierecks angeordnet sind, wobei zwei der Dämpfereinrichtungen (3a, 3b, 3c, 3d) links und zwei der Dämpfereinrichtungen (3a, 3b, 3c, 3d) rechts einer Fahrzeuglängsachse angeordnet sind und wobei die Steuereinrichtung (4) ausgebildet ist, in einem ersten Betriebsmodus ein Paar der Dämpfereinrichtungen (3a, 3b, 3c, 3d) zur Dämpfung einer Druckbelastung und ein Paar der Dämpfereinrichtungen (3a, 3b, 3c, 3d) zur Dämpfung einer Zugbelastung, anzupassen.

8. Fahrerhauslagerung nach Anspruch 7, **dadurch gekennzeichnet, dass** eine Auswahl der Paare in Abhängigkeit der von der Steuereinrichtung (4) ermittelten Fahrerhausbewegung erfolgt.

9. Fahrerhauslagerung (10) nach einem der vorherigen Ansprüche, **dadurch gekennzeichnet, dass** eine von den jeweiligen Dämpfereinrichtung (3a, 3b, 3c, 3d) aufbringbare und/oder einstellbare maximale Dämpfungskraft unter Zug- und Druckbelastung im Wesentlichen gleich ist.

10. Fahrerhauslagerung (10) nach einem der vorherigen Ansprüche, **dadurch gekennzeichnet, dass** die Dämpfungskraft der Dämpfereinrichtung (3a, 3b, 3c, 3d) vorausschauend eingestellt wird.

11. Verfahren zur Einstellung einer Dämpfung einer Fahrerhauslagerung (10) eines Nutzfahrzeugs (20), umfassend mindestens vier zwischen dem Fahrerhaus (1) und einem Rahmen (2) des Nutzfahrzeugs (20) angeordnete Dämpfereinrichtungen (3a, 3b, 3c, 3d), die jeweils separat in ihrer Dämpfungskraft einstellbar sind, wobei jede der Dämpfereinrichtungen (3a, 3b, 3c, 3d) ausgebildet ist, sowohl Zug- als auch Druckbelastung vom Fahrerhaus (1) auf den Rahmen (2) zu dämpfen und wobei jede Dämpfereinrichtung (3a, 3b, 3c, 3d) einen ersten und zweiten Dämpfer (3a₁, 3b₁, 3c₁, 3d1; 3a₂, 3b₂, 3c₂, 3d₂) umfasst, die derart angeordnet sind, dass bei einer Zugbelastung vom Fahrerhaus (1) auf den Rahmen (2) im Wesentlichen der erste Dämpfer (3a₁, 3b₁, 3c₁, 3d₁) und bei einer Druckbelastung vom Fahrerhaus (1) auf den Rahmen (2) im Wesentlichen der zweite Dämpfer (3a₂, 3b₂, 3c₂, 3d₂) dämpfend wirkt, umfassend die Schritte:
- Ermitteln welche der Dämpfereinrichtungen (3a, 3b, 3c, 3d) einer Zugbelastung vom Fahrerhaus (1) auf den Rahmen (2) und welche einer Druckbelastung vom Fahrerhaus (1) auf den Rahmen (2) ausgesetzt sind;
- Anpassen der Dämpferkraft der Dämpfereinrichtungen (3a, 3b, 3c, 3d), die einer Zugbelastung vom Fahrerhaus (1) auf den Rahmen (2) ausgesetzt sind, zur Dämpfung einer Zugbelastung vom Fahrerhaus (1) auf den Rahmen (2); und/oder
- Anpassen der Dämpferkraft der Dämpfereinrichtungen (3a, 3b, 3c, 3d), die einer Druckbelastung vom Fahrerhaus (1) auf den Rahmen (2) ausgesetzt sind, zur Dämpfung einer Druckbelastung vom Fahrerhaus (1) auf den Rahmen (2).

12. Nutzfahrzeug (20) mit einer Fahrerhauslagerung (10) nach einem der vorherigen Ansprüche.

## Claims

1. A driver's cab mounting (10) for a commercial vehicle (20), comprising at least four damper installations (3a, 3b, 3c, 3d) which are disposed between the driver's cab (1) and a frame (2) of the commercial vehicle (20) and are in each case separately adjustable in terms of the damping force of said damper installations (3a, 3b, 3c, 3d), wherein each of the damper installations (3a, 3b, 3c, 3d) is configured to dampen a tensile load as well as a compressive load from the driver's cab (1) on the frame (2); **characterized in that** each damper installation (3a, 3b, 3c, 3d) comprises a first and a second damper (3a₁, 3b₁, 3c₁, 3d₁; 3a₂, 3b₂, 3c₂, 3d₂) which are disposed in such a manner that in the event of a tensile load from the driver's cab (1) on the frame (2) the first damper (3a₁, 3b₁, 3c₁, 3d₁) substantially acts in a damping manner, and in the event of a compressive load from the driver's cab (1) on the frame (2) the second damper (3a₂, 3b₂, 3c₂, 3d₂) substantially acts in a damping manner.

2. The driver's cab mounting (10) according to one of the preceding claims, **characterized** a) in that the driver's cab mounting comprises no mechanical stabilizer, preferably no mechanical stabilizer in the form of a torsion bar spring for stabilizing rolling and/or pitching; and/or b) in that the damper installations (3a, 3b, 3c, 3d) are actuated in such a manner that said damper installations (3a, 3b, 3c, 3d) assume the function of a mechanical stabilizer.

3. The driver's cab mounting (10) according to one of the preceding claims, **characterized by** a control installation (4) which, based on data of a sensor installation (5), preferably of an acceleration sensor, is specified to determine a driver's cab movement, preferably a change in the status of the driver's cab, and to adapt the damping force of the damper installations (3a, 3b, 3c, 3d) for damping the determined driver's cab movement, preferably a rolling and/or pitching movement of the driver's cab.

4. The driver's cab mounting (10) according to Claim 3, **characterized in that** the sensor installation (5) is disposed in a roof region of the driver's cab.

5. The driver's cab mounting (10) according to Claim 3 or 4, **characterized in that** the sensor installation (5) and/or control installation (4) determine/determines a temporal variation of an acceleration, preferably an acceleration variation vector having components of a temporal variation of an acceleration in three spatial directions that are in each case mutually perpendicular.

6. The driver's cab mounting (10) according to one of Claims 3 to 5, **characterized in that** the control installation (4), based on the determined movement, is configured to
a) determine those damper installations (3a, 3b, 3c, 3d) that are exposed to a tensile load from the driver's cab (1) on the frame (2), and to adapt the damping force of those damper installations (3a, 3b, 3c, 3d) for damping a tensile load from the driver's cab (1) on the frame (2); and/or
b) determine those damper installations (3a, 3b, 3c, 3d) that are exposed to a compressive load from the driver's cab (1) on the frame (2), and to adapt the damping force of those damper installations (3a, 3b, 3c, 3d) for damping a compressive load from the driver's cab (1) on the frame (2).

7. The driver's cab mounting (10) according to one of Claims 3 to 6, **characterized by** four damper installations (3a, 3b, 3c, 3d) which are disposed in the form of a quadrangle, wherein two of the damper installations (3a, 3b, 3c, 3d) are disposed to the left of a vehicle longitudinal axis, and two of the damper installations (3a, 3b, 3c, 3d) are disposed to the right of a vehicle longitudinal axis, and wherein the control installation (4) in a first operating mode is configured to adapt one pair of the damper installations (3a, 3b, 3c, 3d) for damping a compressive load, and one pair of the damper installations (3a, 3b, 3c, 3d) for damping a tensile load.

8. The driver's cab mounting according to Claim 7, **characterized in that** a selection of the pairs is performed as a function of the driver's cab movement determined by the control installation (4).

9. The driver's cab mounting (10) according to one of the preceding claims, **characterized in that** a maximum damping force that is able to be applied and/or adjusted by the respective damper installation (3a, 3b, 3c, 3d) is substantially identical under a tensile load and a compressive load.

10. The driver's cab mounting (10) according to one of the preceding claims, **characterized in that** the damping force of the damper installation (3a, 3b, 3c, 3d) is predictively adjusted.

11. A method for adjusting a damping of a driver's cab mounting (10) of a commercial vehicle (20), comprising at least four damper installations (3a, 3b, 3c, 3d) which are disposed between the driver's cab (1) and a frame (2) of the commercial vehicle (20) and are in each case separately adjustable in terms of the damping force of said damper installations (3a, 3b, 3c, 3d), wherein each of the damper installations (3a, 3b, 3c, 3d) is configured to dampen a tensile load as well as a compressive load from the driver's cab (1) on the frame (2), and wherein each damper installation (3a, 3b, 3c, 3d) comprises a first and a second damper (3a₁, 3b₁, 3c₁, 3d₁; 3a₂, 3b₂, 3c₂, 3d₂) which are disposed in such a manner that in the event of a tensile load from the driver's cab (1) on the frame (2) the first damper (3a₁, 3b₁, 3c₁, 3d₁) substantially acts in a damping manner, and in the event of a compressive load from the driver's cab (1) on the frame (2) the second damper (3a₂, 3b₂, 3c₂, 3d₂) substantially acts in a damping manner, said method comprising the following steps:
- determine which of the damper installations (3a, 3b, 3c, 3d) is exposed to a tensile load from the driver's cab (1) on the frame (2), and which is exposed to a compressive load from the driver's cab (1) on the frame (2);
- adapting the damping force of the damper installations (3a, 3b, 3c, 3d) that are exposed to a tensile load from the driver's cab (1) on the frame (2), for damping a tensile load from the driver's cab (1) on the frame (2); and/or
- adapting the damping force of the damper installations (3a, 3b, 3c, 3d) that are exposed to a compressive load from the driver's cab (1) on the frame (2), for damping a compressive load from the driver's cab (1) on the frame (2).

12. A commercial vehicle (20) having a driver's cab mounting (10) according to one of the preceding claims.

## Revendications

1. Suspension de cabine de conducteur (10) pour un véhicule utilitaire (20), comprenant au moins quatre dispositifs amortisseurs (3a, 3b, 3c, 3d) disposés entre la cabine de conducteur (1) et un châssis (2) du véhicule utilitaire (20) et qui sont respectivement réglables séparément en termes de force d'amortissement, chacun des dispositifs amortisseurs (3a, 3b, 3c, 3d) étant réalisé pour amortir aussi bien une contrainte de traction qu'une contrainte de compression de la cabine de conducteur (1) au châssis (2) ;
**caractérisée en ce que** chaque dispositif amortisseur (3a, 3b, 3c, 3d) comprend un premier et un deuxième amortisseur (3a₁, 3b₁, 3c₁, 3d₁ ; 3a₂, 3b₂, 3c₂, 3d₂) qui sont disposés de telle sorte que sous une contrainte de traction de la cabine de conducteur (1) au châssis (2), substantiellement le premier amortisseur (3a₁, 3b₁, 3c₁, 3d₁) produit un effet d'amortissement, et sous une contrainte de compression de la cabine de conducteur (1) au châssis (2), substantiellement le deuxième amortisseur (3a₂, 3b₂, 3c₂, 3d₂) produit un effet d'amortissement.

2. Suspension de cabine de conducteur (10) selon l'une quelconque des revendications précédentes, **caractérisée**
a) **en ce que** la suspension de cabine de conducteur ne comprend aucun stabilisateur mécanique, de préférence aucun stabilisateur mécanique sous forme de ressort à barre de torsion pour la stabilisation de roulis et/ou de tangage, et/ou
b) **en ce que** les dispositifs amortisseurs (3a, 3b, 3c, 3d) sont pilotés de telle sorte qu'ils prennent en charge la fonction d'un stabilisateur mécanique.

3. Suspension de cabine de conducteur (10) selon l'une quelconque des revendications précédentes, **caractérisée par** un dispositif de commande (4) qui est réalisé pour déterminer sur la base de données d'un dispositif capteur (5), de préférence d'un capteur d'accélération, un mouvement de cabine de conducteur, de préférence un changement d'état de la cabine de conducteur, ainsi que pour adapter la force d'amortisseur des dispositifs amortisseurs (3a, 3b, 3c, 3d) pour l'amortissement du mouvement de cabine de conducteur déterminé, de préférence un mouvement de roulis et/ou de tangage de la cabine de conducteur.

4. Suspension de cabine de conducteur (10) selon la revendication 3, **caractérisé en ce que** le dispositif capteur (5) est disposé dans une zone de toit de la cabine de conducteur.

5. Suspension de cabine de conducteur (10) selon la revendication 3 ou 4, **caractérisé en ce que** le dispositif capteur (5) et/ou le dispositif de commande (4) détermine un changement dans le temps d'une accélération, de préférence un vecteur de changement d'accélération avec des composantes d'un changement dans le temps d'une accélération dans respectivement trois directions spatiales perpendiculaires les unes par rapport aux autres.

6. Suspension de cabine de conducteur (10) selon l'une quelconque des revendications 3 à 5, **caractérisé en ce que** sur la base du mouvement déterminé, le dispositif de commande (4) est réalisé
a) pour déterminer ceux des dispositifs amortisseurs (3a, 3b, 3c, 3d) qui sont soumis à une contrainte de traction de la cabine de conducteur (1) au châssis (2), et pour adapter leur force d'amortisseur afin d'amortir une contrainte de traction de la cabine de conducteur (1) au châssis (2) ; et/ou
b) pour déterminer ceux des dispositifs amortisseurs (3a, 3b, 3c, 3d) qui sont soumis à une contrainte de compression de la cabine de conducteur (1) au châssis (2), et pour adapter leur force d'amortisseur afin d'amortir une contrainte de compression de la cabine de conducteur (1) au châssis (2) .

7. Suspension de cabine de conducteur (10) selon l'une quelconque des revendications 3 à 6, **caractérisée par** quatre dispositifs amortisseurs (3a, 3b, 3c, 3d), qui sont disposés sous la forme d'un rectangle, dans laquelle deux des dispositifs amortisseurs (3a, 3b, 3c, 3d) sont disposés à gauche et deux des dispositifs amortisseurs (3a, 3b, 3c, 3d) sont disposés à droite d'un axe longitudinal de véhicule, et dans laquelle le dispositif de commande (4) est réalisé, dans un premier mode de fonctionnement, pour adapter une paire des dispositifs amortisseurs (3a, 3b, 3c, 3d) en vue de l'amortissement d'une charge de compression et pour adapter une paire des dispositifs amortisseurs (3a, 3b, 3c, 3d) en vue de l'amortissement d'une contrainte de traction.

8. Suspension de cabine de conducteur selon la revendication 7, **caractérisée en ce qu'**une sélection des paires a lieu en fonction du mouvement de cabine de conducteur déterminé par le dispositif de commande (4).

9. Suspension de cabine de conducteur (10) selon l'une quelconque des revendications précédentes, **caractérisée en ce qu'**une force d'amortissement maximale pouvant être exercée par le dispositif amortisseur respectif (3a, 3b, 3c, 3d) et/ou réglée est substantiellement identique sous une contrainte de traction et une contrainte de compression.

10. Suspension de cabine de conducteur (10) selon l'une quelconque des revendications précédentes, **caractérisée en ce que** la force d'amortissement du dispositif amortisseur (3a, 3b, 3c, 3d) est réglée par anticipation.

11. Procédé permettant de régler un amortissement d'une suspension de cabine de conducteur (10) d'un véhicule utilitaire (20), comprenant au moins quatre dispositifs amortisseurs (3a, 3b, 3c, 3d) disposés entre la cabine de conducteur (1) et un châssis (2) du véhicule utilitaire (20) et qui sont respectivement réglables séparément en termes de force d'amortissement, dans lequel chacun des dispositifs amortisseurs (3a, 3b, 3c, 3d) est réalisé pour amortir aussi bien une contrainte de traction qu'une contrainte de compression de la cabine de conducteur (1) au châssis (2), et dans lequel chaque dispositif amortisseur (3a, 3b, 3c, 3d) comprend un premier et un deuxième amortisseur (3a₁, 3b₁, 3c₁, 3d₁ ; 3a₂, 3b₂, 3c₂, 3d₂) qui sont disposés de telle sorte que sous une contrainte de traction de la cabine de conducteur (1) au châssis (2), substantiellement le premier amortisseur (3a₁, 3b₁, 3c₁, 3d₁) produit un effet d'amortissement, et sous une contrainte de compression de la cabine de conducteur (1) au châssis (2), substantiellement le deuxième amortisseur (3a₂, 3b₂, 3c₂, 3d₂) produit un effet d'amortissement, comprenant les étapes consistant à :
- déterminer lesquels des dispositifs amortisseurs (3a, 3b, 3c, 3d) sont soumis à une contrainte de traction de la cabine de conducteur (1) au châssis (2) et lesquels sont soumis à une contrainte de compression de la cabine de conducteur (1) au châssis (2) ;
- adapter la force d'amortisseur des dispositifs amortisseurs (3a, 3b, 3c, 3d) qui sont soumis à une contrainte de traction de la cabine de conducteur (1) au châssis (2) en vue de l'amortissement d'une contrainte de traction de la cabine de conducteur (1) au châssis (2) ; et/ou
- adapter la force d'amortisseur des dispositifs amortisseurs (3a, 3b, 3c, 3d) qui sont soumis à une contrainte de compression de la cabine de conducteur (1) au châssis (2) en vue de l'amortissement d'une contrainte de compression de la cabine de conducteur (1) au châssis (2).

12. Véhicule utilitaire (20) comprenant une suspension de cabine de conducteur (10) selon l'une quelconque des revendications précédentes.
